# EUROPÄISCHE PATENTSCHRIFT

(11) **EP 2 665 058 B1**
(45) Veröffentlichungstag und Bekanntmachung des Hinweises auf die Patenterteilung: **03.02.2016**
(21) Anmeldenummer: 13165295.0
(22) Anmeldetag: 25.04.2013
(51) Int. Cl.: G10K 11/172, G02B 21/24, G02B 26/10, G10K 11/00, G10K 11/175

(54) **Mikroskop mit einer Vorrichtung zur Dämmung von Schall im optischen Strahlengang eines Mikroskops**
Device for insulating sound in the optical beam path of a microscope and microscope with such a device
Dispositif d'isolation du bruit dans le faisceau de rayons optique d'un microscope et microscope doté d'un tel dispositif

(30) Priorität: 16.05.2012 DE 102012208250
(43) Veröffentlichungstag der Anmeldung: 20.11.2013
(73) Patentinhaber: Leica Microsystems CMS GmbH, 35578 Wetzlar (DE)
(72) Erfinder: Birk, Holger, 74909 Meckesheim (DE); Seyfried, Volker, 69226 Nussloch (DE); Fehrer, Dirk-Oliver, 76669 Bad Schönborn (DE); Krishnamachari, Vishnu Vardan, 68199 Mannheim (DE)
(74) Vertreter: Patent- und Rechtsanwälte Ullrich & Naumann

(56) Entgegenhaltungen:
- EP-A1- 0 741 311
- EP-A2- 0 618 469
- DE-A1-102004 049 437
- US-A1- 2006 050 346
- US-A1- 2010 091 083
- JUNG Y H ET AL: "Reduction of aero-acoustic noise originating from a high-speed polygon mirror scanner motor in a laser beam printer utilizing air-flow analysis", MICROSYSTEM TECHNOLOGIES ; MICRO AND NANOSYSTEMS INFORMATION STORAGE AND PROCESSING SYSTEMS, SPRINGER, BERLIN, DE, Bd. 17, Nr. 5 - 7, 5. Februar 2011 (2011-02-05), Seiten 771-776, XP019906795, ISSN: 1432-1858, DOI: 10.1007/S00542-011-1241-Y

## Beschreibung

Die Erfindung betrifft ein Mikroskop mit einer Vorrichtung zur Dämmung von Schall im optischen Strahlengang des Mikroskops, umfassend ein Schallschutzgehäuse (Gehäuse) zum Kapseln eines Schall emittierenden Bauteils, nämlich eines sich schnell bewegenden Stahlablenkmittels oder eines oszillierenden Strahlablenkmittels oder eines resonant schwingenden Spiegels, wobei das Gehäuse mindestens eine optische Ein-/Austrittsöffnung aufweist, wobei das Gehäuse, derart ausgebildet und/oder ausgestattet ist, dass der ansonsten aus dem Gehäuse austretende Schall durch destruktive Interferenz weitgehend ausgelöscht ist, ohne dabei den optischen Strahl zu beeinflussen.

Bei Mikroskopen, insbesondere bei Rastermikroskopen, gibt es unterschiedliche Schallquellen, meist hervorgerufen durch bewegliche Bauteile im optischen Strahlengang des Mikroskops. Die Schallemissionen sind beim Betrieb des Mikroskops störend, zum einen in Bezug auf die mikroskopierende Person und zum anderen in Bezug auf aus der Schallemission resultierende Vibrationen.

In der Rastermikroskopie dient eine Strahlablenkeinrichtung zur Strahlsteuerung, insbesondere zum Einkoppeln des Beleuchtungslichts, wobei die Probe durch den abgelenkten Beleuchtungsstrahl beispielsweise zeilenweise mäanderförmig abgetastet wird. Von der Probe zurückkommendes Detektionslicht passiert die Strahlablenkeinrichtung und wird zu den Detektoren geführt.

Insbesondere bei Verwendung resonanter Galvanometer, die einen sich mit einer Frequenz von mehreren kHz um die eigene Drehachse bewegenden bzw. in Schwingung versetzten Spiegel antreiben, entstehen bei hohen Ablenkraten unangenehme störende Geräusche, nämlich aufgrund des von den beweglichen Teilen ausgehenden Schalls.

Das hier zugrundeliegende Problem ist in der Praxis bereits erkannt worden. Lediglich beispielhaft sei dazu auf die DE 10 2004 049 437 A1 verwiesen. Dort ist vorgesehen, das beweglich angeordnete Ablenkmittel in einem weitestehend schalldichten Gehäuse mit einem Eintrittsfenster und/oder einem Austrittsfenster zu positioniert ist. Letztendlich wird die Schallquelle gekapselt, wobei das Eintrittsfenster und/oder das Austrittsfenster als optische Elemente zu verstehen sind, die den Strahlengang - Beleuchtungsstrahlengang und/oder Detektionsstrahlengang - beeinflussen.

Die aus der DE 10 2004 049 437 A1 bekannte Kapselung ist jedoch in der Praxis problematisch, da die dort zwingend erforderlichen Fenster in optischer Hinsicht unerwünscht sind. Sie verursachen eine Transmission von weniger als 100 % und sorgen für eine nicht unerhebliche Interferenz an den Grenzflächen. Selbst wenn als Fenster optische Bauteile verwendet werden, die ohnehin im Strahlengang erforderlich sind, beispielsweise Linsen, bringt die Notwendigkeit eines schalldichten Einbaus der beweglichen Teile in ein Gehäuse ganz erhebliche Einschränkungen mit sich. Insbesondere variable Bauteile wie beispielsweise Strahlteilerschieber, sind nur äußerst schwierig innerhalb eines hermetisch dichten Gehäuses anordenbar, vor allem aber von außen betreibbar bzw. betätigbar. Der konstruktive Aufwand ist, sofern eine Realisierung überhaupt möglich ist, erheblich.

Aus den Dokumenten US 2006/050346 A1, EP 0 618 469 A2, US 2010/091083 A1, EP 0 741 311 A1 sowie Jung Y H et al: "Reduction of aero-acoustic noise originating from a high-speed polygon mirror scanner motor in a laser beam printer utilizing airflow analysis", Microsystem Technologies; Micro and Nanosystems Information Storage and Processing Systems, Springer, Berlin, DE, Bd. 17, Nr. 5-7 sind jeweils Schallschutzgehäuse für einzelne Bauteile von Druckern, insbesondere von Laserdruckern, vorbekannt.

An dieser Stelle sei angemerkt, dass es hier grundsätzlich um die Elimination von Schallwellen geht, die innerhalb eines Mikroskops durch schnell bewegliche Teile verursacht werden. Die in einem Rastermikroskop zum Einsatz kommende Strahlablenkeinrichtung mit ihrem schnell beweglichen, meiste resonant arbeitenden Ablenkmittel, ist hier lediglich beispielhaft genannt und dient zur Erörterung der beanspruchten Lehre. Jedenfalls führen insbesondere schnelle Bewegungen von Bauteilen, beispielsweise solcher Ablenkmittel, zu unerwünschten Emissionen von Schall. Besonders störend wird eine Schallemission dann empfunden, wenn sie durch ein Bauteil verursacht wird, welches resonant oder nichtresonant im Bereich mehrerer kHz zu Schwingungen angeregt wird, wie dies im Rahmen der Rastermikroskopie bei dem als Ablenkmittel dienenden Spiegel regelmäßig der Fall ist. Der Erfindung liegt die Aufgabe zugrunde, ein Mikroskop umfassend eine Vorrichtung der gattungsbildenden Art derart auszugestalten und weiterzubilden, dass sich Schallemissionen störender Schallquellen im optischen Strahlengang des Mikroskops effizient dämmen lassen, ohne dabei den optischen Strahlengang zu beeinflussen.

Voranstehende Aufgabe ist durch die Merkmale des Anspruchs 1 gelöst.

Das erfindungsgemäße Mikroskop ist dadurch gekennzeichnet, dass die Ein-/Austrittsöffnung durch eine sich vom Gehäuse weg erstreckende Röhre gebildet ist, wobei die Röhre mit mindestens einem seitlich von der Röhre abragenden Röhrenzweig ausgestattet ist, dass der Röhrenzweig endseitig geschlossen ist oder dass der Röhrenzweig als ein von der Röhre abgehender und wieder in die Röhre oder in das Gehäuse mündender Bypass mit angepasster akustische Weglänge ausgeführt ist.

Erfindungsgemäß ist erkannt worden, dass sich der störende Schall, der bei Mikroskopen mit schnell beweglichen Bauteilen im Strahlengang entsteht, auf raffinierte und dabei verblüffend einfache Weise dadurch eliminieren, zumindest aber eindämmen lässt, indem die Ein-/Austrittsöffnung derart ausgestaltet ist, dass der ansonsten aus dem Gehäuse austretende Schall durch destruktive Interferenz weitgehend ausgelöscht wird, und zwar ohne dabei den optischen Strahlengang zu beeinflussen. Dies steht im Gegensatz zu dem zuvor genannten Stand der Technik, wonach rein passive Maßnahmen, nämlich zur Kapselung der den Schall emittierenden Bauteile, vorgesehen sind.

In erfindungsgemäßer Weise ist wesentlich, dass die den Schallschutz betreffende Maßnahme keine Auswirkungen auf den optischen Strahl hat. Dieser kann die Ein-/Austrittsöffnung bzw. die Ein-/Austrittsöffnungen des Gehäuses ungehindert passieren, wenngleich der Schall aufgrund von Interferenzbedingungen eliminiert, zumindest aber ganz erheblich reduziert ist.

Die erfindungsgemäße Elimination oder Reduktion von Schall ist insbesondere dann möglich, wenn es sich bei der Schallquelle um eine akustisch monochromatische Schallquelle (bei der der erzeugte Schall eine einzige Frequenz hat, evtl. mit Oberwellen) handelt, wie dies bei einem Rastermikroskop mit resonant schwingendem Spiegel der Fall ist. Dort hat nämlich der entstehende Schall im Wesentlichen die Frequenzkomponente der resonanten Schwingfrequenz.

Wie auch im Stand der Technik ist ein Schallschutzgehäuse, nachfolgenden Gehäuse genannt, vorgesehen, wobei das Gehäuse mindestens eine Ein-/Austrittsöffnung zum Strahleintritt und/oder Strahlaustritt aufweist. Regelmäßig ist eine optische Eintrittsöffnung und eine optische Austrittsöffnung im Gehäuse vorgesehen, wobei beide Öffnungen in Bezug auf eine Schallemission nach dem gleichen - erfindungsgemäßen - Prinzip gedämmt sein können, nämlich unter Nutzung destruktiver Interferenz.

In erfindungsgemäßer Weise ist die Ein-/Austrittsöffnung durch eine sich vom Gehäuse weg erstreckende Röhre gebildet, wobei eine Schalldämmung über die Länge der Röhre hinweg stattfindet.

In weiter erfindungsgemäßer Weise ist die Röhre mit mindestens einem seitlich von der Röhre abragenden Röhrenzweig ausgestattet. Dabei kann der Röhrenzweig im Sinne eines Sacklochs ausgebildet sein. Die Länge des Röhrenzweigs wird in vorteilhafter Weise so gewählt, dass Schallwellen, die in den Röhrenzweig laufen und dort endseitig reflektiert werden, eine Phasenänderung von 180° gegenüber der geradeaus laufenden Welle erfahren und so gemeinsam mit der in der Röhre geradeaus laufenden Welle zur destruktiven Interferenz führen. Die effektive Länge des Röhrenzweigs kann somit ein Viertel bzw. ungeradzahlige Vielfache eines Viertels der akustischen Wellenlänge betragen.

Für eine maximale Schallunterdrückung sollte die Intensität der beiden Wellen, d.h. die Intensität der in der Röhre geradeaus laufenden Welle und die Intensität der aus dem Röhrenzweig zurückkommenden Welle möglichst gleich, zumindest aber ähnlich sein.

Es ist von weiterem Vorteil, wenn die Röhre mit zwei oder mehreren seitlich von der Röhre abragenden Röhrenzweigen ausgestattet ist, zum einen, um den Schall eliminierenden Effekt zu vergrößern und zum anderen zur Elimination von Schall unterschiedlicher Wellenlängen, beispielsweise verursacht durch unterschiedliche bewegliche Bauteile oder Oberwellen.

Erfindungsgemäß ist der Röhrenzweig endseitig geschlossen, wobei dort vorzugsweise eine Schallreflexionswand ausgebildet sein kann.

Das Absorptions- bzw. Reflexionsverhalten lässt sich beispielsweise durch Abstimmung des jeweiligen Röhrenzweigs beeinflussen, nämlich durch Anpassung von Breite/Durchmesser und/oder Länge des Röhrenzweigs. Zur Veränderung der Länge des Röhrenzweigs ist es in weiter vorteilhafter Weise möglich, eine die Tiefe des Röhrenzweigs veränderliche Schallreflexionswand vorzusehen, wobei diese von einer endseitig in die Röhre schraubbaren Einstellschraube oder von einem einstell-/einschiebbaren Einstellstift, einer Einstellstange oder einem Einstellkolben getragen oder gebildet sein kann. Letztendlich kommt es darauf an, dass der Röhrenzweig in der Länge bzw. Tiefe verstellbar ist, wodurch eine Abstimmung des Röhrenzweigs auf die jeweilige Schallfrequenz möglich ist.

Die Einstellung und somit die Abstimmung der Interferenzbedingungen im Röhrenzweig kann manuell, oder auch motorisiert bzw. hydraulisch oder pneumatisch erfolgen. Wesentlich ist dabei, dass sich auch bei ändernder Schallfrequenz eine optimale Anpassung bzw. Einstellung zur Realisierung der destruktiven Interferenz möglich ist. So ist es beispielsweise denkbar, ein automatisches Nachstellen vorzunehmen, nämlich dann, wenn sich die Frequenz aufgrund eines unterschiedlichen Betriebs ständig verändert und eine ständige Anpassung erforderlich ist. Jedenfalls ist ein automatisierter Betrieb bei entsprechender Detektion der Parameter möglich.

Die Abstimmung des Röhrenzweigs zur Erzeugung der erforderlichen destruktiven Interferenz kann alternativ oder ergänzend durch die Wahl eines geeigneten Materials für die Röhre/den Röhrenzweig erfolgen, wobei das geeignete Material ein definiertes Schall-Absorptionsverhalten hat. Zur Abstimmung des Röhrenzweigs kann sowohl die Geometrie des Röhrenzweigs als auch das Material herangezogen und somit genutzt werden.

Wie bereits zuvor erwähnt, kann die Röhre einen oder mehrere Röhrenzweig(e) umfassen. In weiter erfindungsgemäßer Weise ist der Röhrenzweig als ein von der Röhre abgehender und wieder in die Röhre oder in das Gehäuse mündender Bypass mit angepasster akustischer Wellenlänge ausgeführt. In ganz besonders vorteilhafter Weise hat der Bypass eine um die halbe Schallwellenlänge längere akustische Wegstrecke als die Röhre. Auch insoweit ist die Entstehung einer destruktiven Interferenz gewährleistet.

Grundsätzlich lässt sich auf die gleiche Weise der Schall auch an einer anderen Stelle im Innern des Gehäuses "entnehmen" und mit einer entsprechenden Phasenverzögerung so mit dem Schall in der vom Lichtweg benutzten Öffnung zusammenführen, so dass eine destruktive Interferenz erfolgt.

In Bezug auf das Gehäuse und die vom Gehäuse abgehenden Röhren zur Definition der jeweiligen Ein-/Austrittsöffnungen ist es von weiterem Vorteil, wenn weitere - ergänzende - Maßnahmen zur Dämmung des störenden Schall vorgesehen sind. Dazu ist es möglich, dass im Innern des Gehäuses und/oder im Innern der Röhren und gegebenenfalls der Röhrenzweige akustische Absorber vorgesehen sind, die zumindest partiell die jeweiligen Innenflächen auskleiden. Insbesondere für Schallquellen mit variabler Frequenz lässt sich in idealer Weise eine im Innern mit schallabsorbierendem Material ausgekleidete Röhre als optische Ein-/Austrittsöffnung des Gehäuses verwenden, ohne dabei den optischen Strahlengang zu beeinflussen. Die Vorkehrung eines innen im Gehäuse und in einer sehr langen Röhre ausgebildeten Absorbermaterials kann als Alternative zur destruktiven Interferenz gesehen werden, nämlich im Sinne einer Röhre als Breitband-Absorber. Auch eine solche Auskleidung hat erfindungsgemäße Aspekte im Sinne der destruktiven Interferenz: Da sich der Schall am Rand der Röhre aufgrund der Eigenschaften des Absorbermaterials langsamer oder zumindest mit anderer Geschwindigkeit fortbewegt als in der Mitte, kann sich aufgrund der Phasenverzögerung der am Rand verlaufenden Schallanteile gegenüber der in der Mitte verlaufenden Schallanteile insbesondere nach Vermischung der beiden Anteile über eine längere Laufstrecke eine destruktive Interferenz ausbilden, die letztendlich ebenfalls zu einer Schallunterdrückung nach außen hin führt, nämlich analog zur erfindungsgemäßen Lehre.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Ausführungsbeispiel einer erfindungsgemäßen Vorrichtung, wobei dort der optische Strahl über ein Fenster zu einem schwingenden Spiegel (Schallquelle) geführt wird und von dort aus durch eine Röhre mit Röhrenzweig aus dem Gehäuse herausgeführt wird,
- Fig. 2: in einer schematischen Ansicht den Gegenstand aus Fig. 1, wobei dort eine variable Abstimmung des Röhrenzweigs zur Anpassung auf die jeweilige Frequenz des Schalls mittels Schieber vorgesehen ist,
- Fig. 3: in einer schematischen Ansicht den Gegenstand aus Fig. 1, wobei dort zur variablen Abstimmung des Röhrenzweigs zur Anpassung auf die jeweilige Frequenz des Schalls eine in den Röhrenzweig mittels Schraube vorgesehen ist,
- Fig. 4: in einer schematischen Ansicht ein weiteres Ausführungsbeispiel einer erfindungsgemäßen Vorrichtung, wobei dort die Röhre mit einem Bypass mit angepasster akustischer Weglänge ausgestattet ist,
- Fig. 5: in einer schematischen Ansicht ein weiteres Ausführungsbeispiel einer erfindungsgemäßen Vorrichtung, wobei sich dort zwischen Gehäuse und Röhre ein Bypass mit akustischer Weglänge erstreckt,
- Fig. 6: in einer schematischen Ansicht ein weiteres Ausführungsbeispiel einer erfindungsgemäßen Vorrichtung, wobei dort das Gehäuse eine Einund eine Austrittsöffnung mit Röhren aufweist, die beide mit Röhrenzweigen zur beidseitigen Herbeiführung einer destruktiven Interferenz ausgestattet sind,
- Fig. 7: in einer schematischen Ansicht ein weiteres Ausführungsbeispiel einer erfindungsgemäßen Vorrichtung, wobei dort eine der Röhren mit zwei Röhrenzweigen zur Verstärkung der Schalldämmung, durch die Sequenz zweier Filter, ausgestattet ist,
- Fig. 8: in einer schematischen Ansicht ein weiteres Ausführungsbeispiel einer erfindungsgemäßen Vorrichtung, wobei dort in einer Röhre zwei unterschiedlich lange Röhrenzweige zur gleichzeitigen Dämmung zweier diskreter Schallfrequenzen vorgesehen sind,
- Fig. 9: in einer schematischen Ansicht ein weiteres Ausführungsbeispiel einer erfindungsgemäßen Vorrichtung, wobei dort das Gehäuse eine Einund eine Austrittsöffnung mit Röhren aufweist, die beide mit einem Röhrenzweig zur beidseitigen Herbeiführung einer destruktiven Interferenz ausgestattet sind, wobei an der Innenwandung des Gehäuses zusätzliche akustische Absorber vorgesehen sind, und
- Fig. 10: in einer schematischen Ansicht ein weiteres Ausführungsbeispiel einer Vorrichtung, die nicht Teil der Erfindung ist, wobei dort sowohl an der Innenwandung des Gehäuses als auch an der Innenwandung einer sehr lang ausgeführten Röhre akustische Absorber ausgebildet sind.

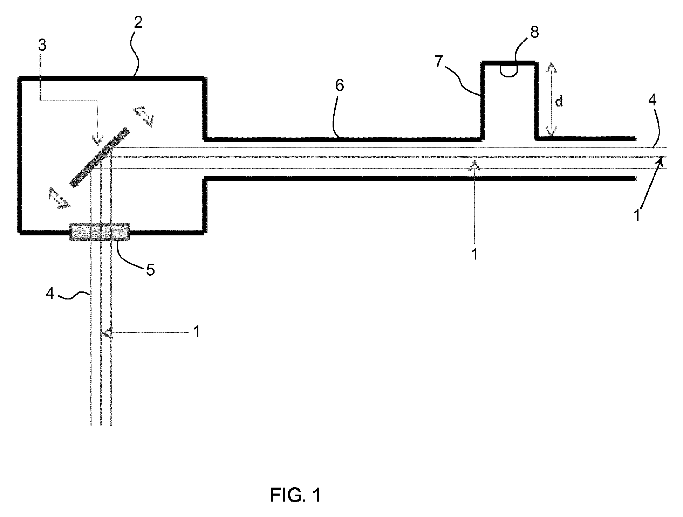

Gemäß der Darstellung in Fig. 1 umfasst die Vorrichtung zur Dämmung von Schall im optischen Strahlengang 1 eines in den Figuren nicht gezeigten Mikroskops ein nachfolgend als Gehäuse bezeichnetes Schallschutzgehäuse 2, welches zum Kapseln eines schallemittierenden Bauteils dient. Beispielhaft ist als Schallquelle ein schwingender Spiegel 3 als oszillierendes Strahlablenkmittel gezeigt.

Der Lichtstrahl 4 gelangt durch ein Fenster 5 in das Innere des Gehäuses 2, trifft dort auf den Spiegel 3 und wird entsprechend der Winkelstellung des Spielgels 3 in eine Röhre 6 durch diese hindurch geleitet, wobei die Röhre 6 eine Ein- bzw. Austrittsöffnung des Gehäuses 2 definiert.

Zur Herbeiführung einer destruktiven Interferenz, nämlich zur weitgehenden Auslöschung des von dem hochfrequent schwingenden Spiegel 3 ausgehenden Schalls, weist die Röhre 6 einen Röhrenzweig 7 auf, der im Sinne eines Sacklochs ausgebildet ist, nämlich endseitig eine Schallreflexionswand 8 aufweist. Der Röhrenzweig 7 ragt seitlich, beispielsweise orthogonal, von der Röhre 6 ab und ist derart ausgestattet, bzw. dimensioniert, dass er gegenüber der in der Röhre 6 geradeaus laufenden Schallwelle eine Phasenänderung von 180° hervorruft, so dass die aus dem Röhrenzweig 7 reflektierte Schallwelle gemeinsam mit der geradeaus laufenden Schallwelle zur destruktiven Interferenz führt. Entsprechend kann die Länge des Röhrenzweigs 7 ein Viertel der akustischen Wellenlänge betragen.

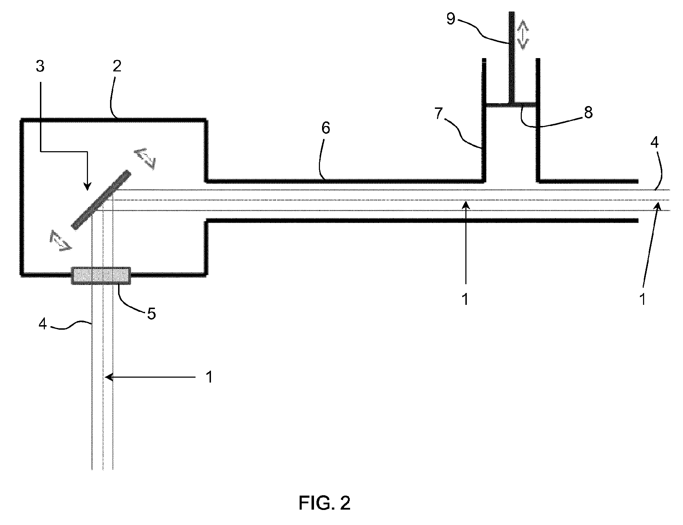

Bei dem in Fig. 2 gezeigten Ausführungsbeispiel ist eine variable Abstimmung der Länge des Röhrenzweigs 7 möglich, wobei dort - lediglich symbolisch - die Schallreflexionswand 8 von einer einschiebbaren Stange 9 getragen ist. Die Schallreflexionswand 8 und die Stange 9 können im Sinne eines Kolbens mit Kolbenstange ausgeführt sein. Ein motorisierter bzw. hydraulisch/pneumatischer Betrieb ist insbesondere zur automatischen Anpassung bzw. Abstimmung des Röhrenzweigs 7 denkbar.

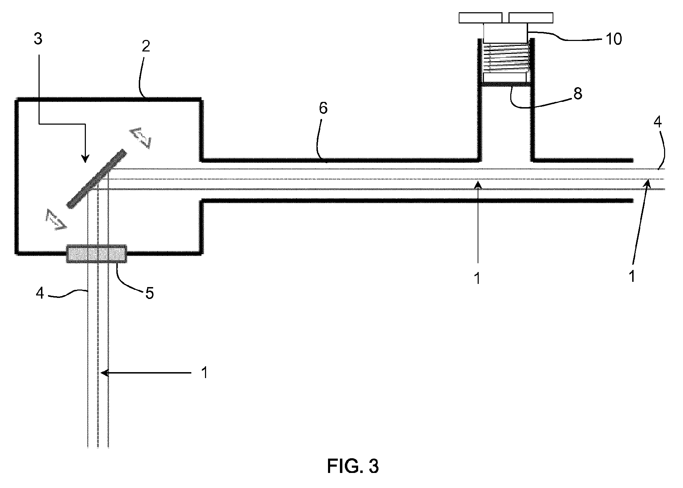

Bei dem in Fig. 3 gezeigten Ausführungsbeispiel wird die Schallreflexionswand 8 über eine Schraube 10 betätigt, die wiederum manuell oder aber auch über einen elektrischen Motor, beispielsweise unter Nutzung einer Spindel, betätigbar bzw. antreibbar ist. Ansonsten entspricht das in Fig. 3 gezeigte Ausführungsbeispiel den Ausführungsbeispielen aus den Fig. 1 und 2.

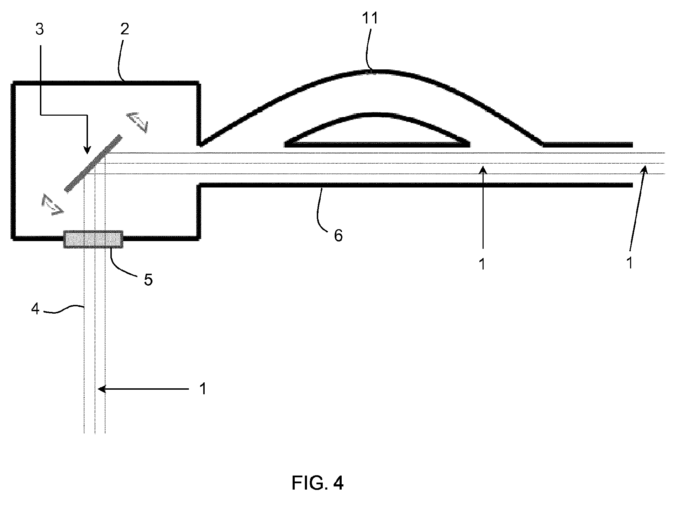

Fig. 4 zeigt ein weiteres Ausführungsbeispiel einer erfindungsgemäßen Vorrichtung, wobei dort die Röhre 6 mit einem Bypass 11 ausgestattet ist, dergestalt, dass der Bypass 11 um die halbe Schallwellenlänge länger ist als die parallele Wegstrecke durch die Röhre 6, so dass Schallwellen, die entlang der beiden möglichen Schallwege laufen, eine relative Phasendifferenz von 180° aufweisen. So ergibt sich am Ende der Röhre 6 kein Schalldruck, nämlich aufgrund der so erzeugten destruktiven Interferenz.

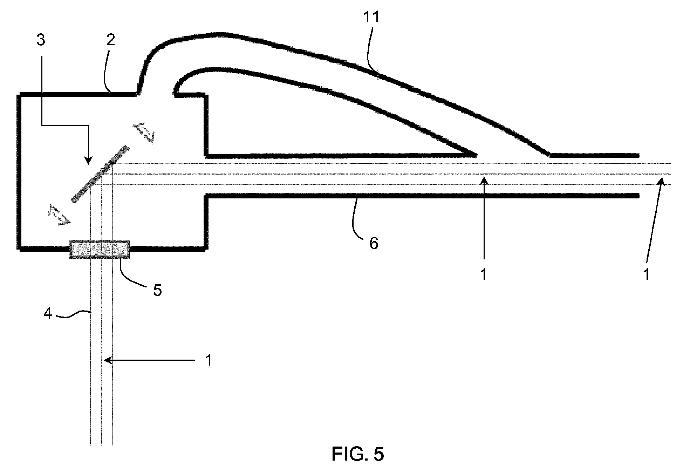

Fig. 5 zeigt eine Abwandlung gegenüber dem Ausführungsbeispiel aus Fig. 4, wobei dort der Schall unmittelbar aus dem Gehäuse 2 heraus "entnommen" wird. Der Bypass 11 erstreckt sich somit vom Gehäuse 2 aus über eine seitliche Öffnung in die Röhre 6, so dass der über den Bypass 11 laufende Schall mit einer entsprechenden Phasenverzögerung mit dem Schall in der vom Lichtweg benutzten Öffnung zusammengeführt wird. Eine destruktive Interferenz lässt sich auch insoweit realisieren.

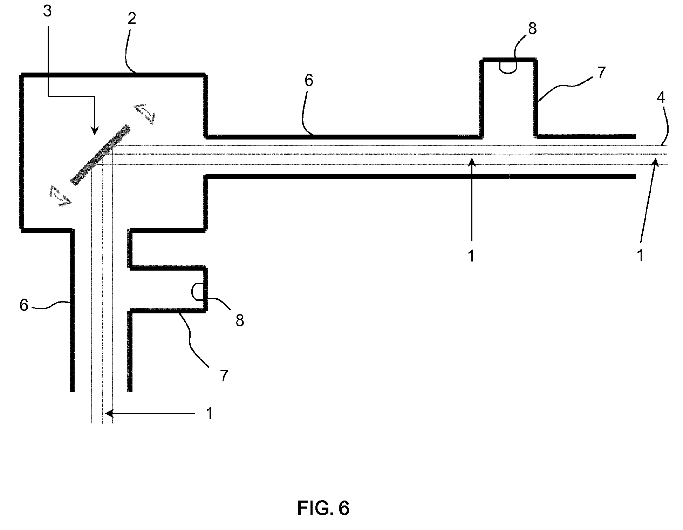

Das in Fig. 6 gezeigte Ausführungsbeispiel definiert durch die Vorkehrung zweier Röhren 6 destruktive Interferenz verursachende Maßnahmen sowohl im Bereich einer optischen Eintrittsöffnung als auch einer optischen Austrittsöffnung. Die Vorkehrung eines Fensters entsprechend den Ausführungsbeispielen der Fig. 1 bis 5 ist hier nicht erforderlich. Beide Röhren 6 sind mit jeweils einem Röhrenzweig 7 ausgestattet, wobei die beiden Röhrenzweige 7 entsprechend den voranstehenden Ausführungen zu den Fig. 1 bis 5 arbeiten.

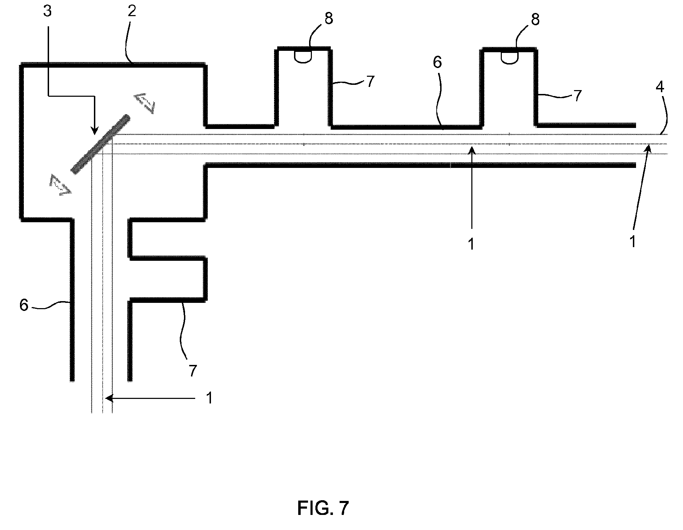

Das Ausführungsbeispiel aus Fig. 7 ist in der einen Röhre 6 um einen weiteren - zweiten - Röhrenzweig ergänzt, nämlich zur Verstärkung der Schalldämmung, letztendlich durch die Sequenz zweier "Filter". Beide Röhrenzweige 7 sind identisch ausgebildet.

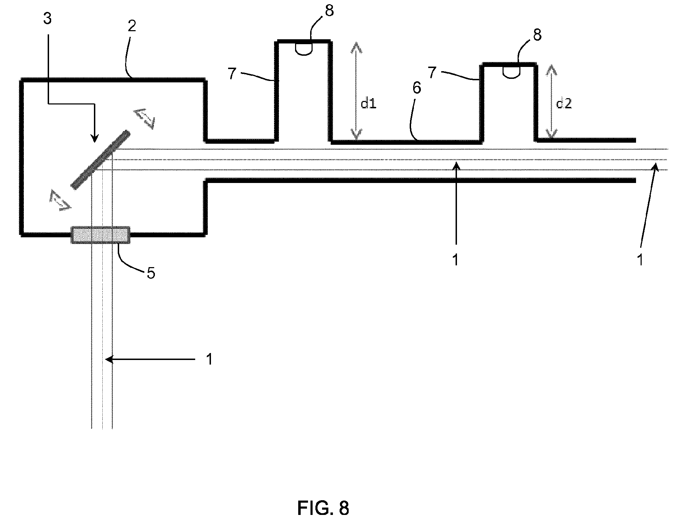

Das Ausführungsbeispiel aus Fig. 8 unterscheidet sich von dem Ausführungsbeispiel aus Fig. 7 in den die beiden Röhrenzweige 7 aufweisenden Röhren dadurch, dass die Röhrenzweige 7 unterschiedlich lang sind. Damit lassen sich zwei oder mehrere diskrete Schallfrequenzen gleichzeitig dämmen, nämlich entsprechend der Anzahl und Ausgestaltung der Röhrenzweige 7.

Wenngleich bei den in Fig. 8 gezeigten Ausführungsbeispiel nur eine Röhre 6 vorgesehen ist, lassen sich hier entsprechend der Ausführungen aus den Fig. 6 und 7 auch zwei Röhren 6 unter Vermeidung eines Fensters 5 vorsehen. Beliebige entsprechende Merkmalskombinationen sind möglich.

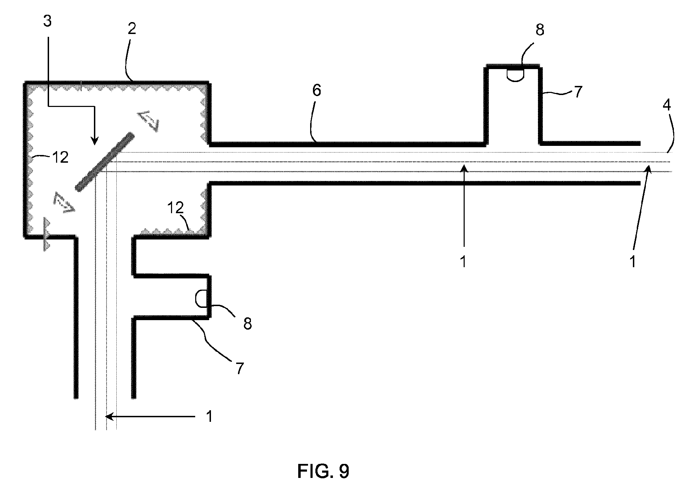

Das Ausführungsbeispiel in Fig. 9 entspricht im Wesentlichen dem Ausführungsbeispiel aus Fig. 6, wobei dort die Innenwandung des Gehäuses 2 mit akustischen Absorbern 12 ausgestattet ist. Dies ist insoweit von Vorteil, als durch die destruktive Interferenz an den optischen Öffnungen bzw. in den Röhren 6 die Schallenergie im Wesentlichen in das Gehäuse 2 zurückreflektiert wird. Die zusätzliche Vorkehrung der akustischen Absorber 12 ruft einen synergetischen Effekt mit den Maßnahmen zur destruktiven Interferenz hervor, wonach nämlich innerhalb des Gehäuses 2 eine Reduktion des Schallpegels durch die zusätzlich verwendeten Absorber 12 stattfindet.

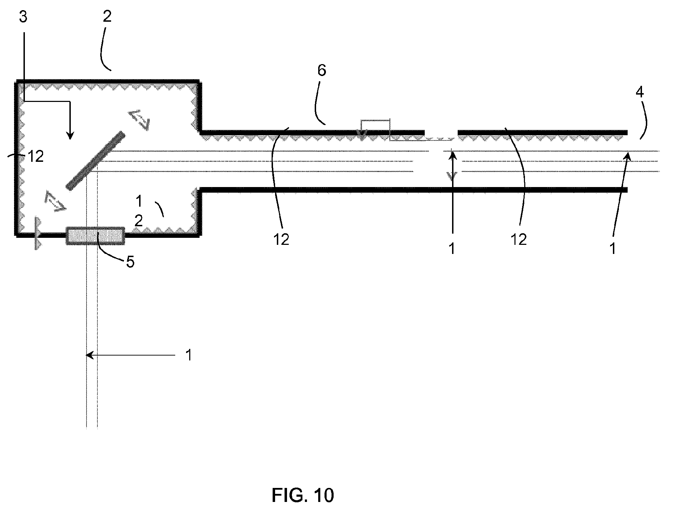

Das in Fig. 10 gezeigte Beispiel, das nicht Gegenstand der Erfindung ist, ist relevant bei Schallquellen mit variabler Frequenz, wobei dort sowohl im Innern des Gehäuses 2 als auch im Innern einer lang ausgeführt Röhre 6, jeweils an der Innenwandung, akustische Absorber 12 angeordnet bzw. ausgebildet sind. Eine solche Röhre 6 lässt sich im Rahmen einer sehr einfachen Ausgestaltung als optische Öffnung im Gehäuse 2 verwenden, ohne dabei den optischen Strahlengang zu beeinträchtigen. Eine Art Breitband-Absorber ist hier realisiert.

Auch hier hat die Auskleidung des Röhrensystems mit dem Absordermaterial eine erfindungsgemäße Wirkung im Sinne der destruktiven Interferenz: Da sich der Schall am Rand der Röhre aufgrund der Eigenschaften des Absorbermaterials langsamer oder zumindest mit anderer Geschwindigkeit fortbewegt als in der Mitte, kann sich aufgrund der Phasenverzögerung der am Rand verlaufenden Schallanteile gegenüber der in der Mitte verlaufenden Schallanteile insbesondere nach Vermischung der beiden Anteile über eine längere Laufstrecke eine destruktive Interferenz ausbilden, die letztendlich ebenfalls zu einer Schallunterdrückung nach außen hin führt.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: optischer Strahlengang
- 2: Gehäuse, Schallschutzgehäuse
- 3: Spiegel
- 4: Lichtstrahl, Strahl
- 5: Fenster
- 6: Röhre
- 7: Röhrenzweig
- 8: Schallreflexionswand
- 9: Stange
- 10: Schraube
- 11: Bypass
- 12: Absorber

## Patentansprüche

1. Mikroskop mit einer Vorrichtung zur Dämmung von Schall im optischen Strahlengang (1) des Mikroskops, umfassend ein Schallschutzgehäuse (Gehäuse) (2) zum Kapseln eines Schall emittierenden Bauteils, nämlich eines sich schnell bewegenden Strahlablenkmittels oder eines oszillierenden Strahlablenkmittels oder eines resonant schwingenden Spiegels (3), wobei das Gehäuse (2) mindestens eine optische Ein-/Austrittsöffnung aufweist, wobei das Gehäuse (2), derart ausgebildet und/oder ausgestattet ist, dass der ansonsten aus dem Gehäuse (2) austretende Schall durch destruktive Interferenz weitgehend ausgelöscht ist, ohne dabei den optischen Strahl (4) zu beeinflussen, der durch die Ein/Austrittsöffnung hindurchtritt,
**dadurch gekennzeichnet, dass** die Ein-/Austrittsöffnung durch eine sich vom Gehäuse (2) weg erstreckende Röhre (6) gebildet ist, wobei die Röhre (6) mit mindestens einem seitlich von der Röhre (6) abragenden Röhrenzweig (7) ausgestattet ist, dass der Röhrenzweig (7) endseitig geschlossen ist oder dass der Röhrenzweig (7) als ein von der Röhre (6) abgehender und wieder in die Röhre (6) oder in das Gehäuse (2) mündender Bypass (11) mit angepasster akustische Weglänge ausgeführt ist.

2. Mikroskop nach Anspruch 1, **dadurch gekennzeichnet, dass** eine optische Eintrittsöffnung und eine optische Austrittsöffnung als separate Eintrittsöffnung und Austrittsöffnung vorgesehen sind und dass die Eintrittsöffnung und die Austrittsöffnung in Bezug auf eine Schallemission nach dem gleichen Prinzip gedämmt sind.

3. Mikroskop nach Anspruch 1 oder 2, **dadurch gekennzeichnet, dass** die Röhre (6) mit zwei oder mehreren seitlich von der Röhre (6) abragenden Röhrenzweigen (7) ausgestattet ist.

4. Mikroskop nach einem der Ansprüche 1 bis 3, **dadurch gekennzeichnet, dass** der Röhrenzweig (7) mittels einer Schallreflexionswand (8) endseitig geschlossen ist.

5. Mikroskop nach Anspruch 3 oder 4, **dadurch gekennzeichnet, dass** die Röhrenzweige (7) unterschiedlich ausgeführt sind, vorzugsweise unterschiedliche Tiefen aufweisen, insbesondere um unterschiedliche Schallfrequenzen gleichzeitig zu dämmen.

6. Mikroskop nach einem der Ansprüche 1 bis 5, **dadurch gekennzeichnet, dass** der Röhrenabzweig (7) derart beschaffen ist, dass Schallwellen, die in dem Röhrenabzweig (7) laufen und dort reflektiert werden, eine Phasenänderung von 180° gegenüber der in der Röhre (6) in Längsrichtung laufenden Welle erfahren und mit der in Längsrichtung laufenden Welle zur destruktiven Interferenz führen.

7. Mikroskop nach einem der Ansprüche 1 bis 6, **dadurch gekennzeichnet, dass** die Abstimmung des Röhrenzweigs (7) durch Anpassung von Breite/Durchmesser und/oder Länge des Röhrenzweigs (7) erfolgt.

8. Mikroskop nach Anspruch 7, **dadurch gekennzeichnet, dass** zur Veränderung der Länge des Röhrenzweigs (7) eine die Tiefe des Röhrenzweigs (7) veränderliche Schallreflexionswand (8) vorgesehen ist.

9. Mikroskop nach Anspruch 8, **dadurch gekennzeichnet, dass** die Schallreflexionswand (8) von einer endseitig in den Röhrenzweig (7) schraubbaren Einstellschraube (10) oder von einem einschiebbaren Einstellstift, einer Einstellstange oder einem Einstellkolben getragen oder gebildet ist.

10. Mikroskop nach Anspruch 9, **dadurch gekennzeichnet, dass** die Einstellung und somit die Abstimmung der Interferenzbedingungen im Röhrenzweig (7) motorisiert bzw. hydraulisch oder pneumatisch, erfolgt.

11. Mikroskop nach einem der Ansprüche 1 bis 10, **dadurch gekennzeichnet, dass** die Abstimmung des Röhrenzweigs (7) durch Wahl eines geeigneten Materials mit definiertem Schall-Absorptionsverhalten erfolgt.

12. Mikroskop nach einem der Ansprüche 1 bis 11, **dadurch gekennzeichnet, dass** der Bypass (11) eine um die halbe Schallwellenlänge längere akustische Wegstrecke als die Röhren (6) hat.

13. Mikroskop nach einem der Ansprüche 1 bis 12, **dadurch gekennzeichnet, dass** im Innern des Gehäuses (2) und/oder im Innern der Röhre(n) (6) akustische Absorber (12) vorgesehen sind, wobei die akustischen Absorber (12) als zumindest partielle Auskleidungen der jeweiligen Innenwandflächen ausgeführt sein können.

14. Mikroskop nach einem der Ansprüche 1 bis 13, **dadurch gekennzeichnet, dass** es sich um ein Rastermikroskop handelt.

## Claims

1. A microscope having an apparatus for damping sound in the optical beam path (1) of the microscope, encompassing a soundproofing housing (housing) (2) for encapsulating a sound-emitting component, namely a fast-moving beam deflection means or an oscillating beam deflection means or a resonantly oscillating mirror (3), the housing (2) comprising at least one optical entrance/exit opening, the housing (2) being embodied and/or equipped so that the sound otherwise emerging from the housing (2) is largely extinguished by destructive interference without thereby influencing the optical beam (4) that passes through the entrance/exit opening,
wherein the entrance/exit opening is constituted by a tube (6) extending away from the housing (2), the tube (6) being equipped with at least one tube branch (7) protruding laterally from the tube (6); the tube branch (7) is closed at the end; or the tube branch (7) is embodied as a bypass (11), proceeding out from the tube (6) and opening back into the tube (6) or into the housing (2), having an adapted acoustic path length.

2. The microscope according to Claim 1, wherein an optical entrance opening and an optical exit opening are provided as a separate entrance opening and exit opening; and the entrance opening and exit opening are damped with regard to sound emission in accordance with the same principle.

3. The microscope according to Claim 1 or 2, wherein the tube (6) is equipped with two or more tube branches (7) protruding laterally from the tube (6).

4. The microscope according to one of Claims 1 to 3, wherein the tube branch (7) is closed at the end by means of a sound-reflecting wall (8).

5. The microscope according to Claim 3 or 4, wherein the tube branches (7) are differently embodied, preferably have different depths, in particular in order to damp different sound frequencies simultaneously.

6. The microscope according to one of Claims 1 to 5, wherein the tube branch (7) is configured in such a way that sound waves that proceed in the tube branch (7) and are reflected there experience a phase change of 180° with respect to the wave proceeding in the longitudinal direction in the tube (6), and result in destructive interference with the wave proceeding in the longitudinal direction.

7. The microscope according to one of Claims 1 to 6, wherein tuning of the tube branch (7) is accomplished by adapting the width/diameter and/or length of the tube branch (7).

8. The microscope according to Claim 7, wherein a sound-reflecting wall (8) modifying the depth of the tube branch (7) is provided in order to modify the length of the tube branch (7).

9. The microscope according to Claim 8, wherein the sound-reflecting wall (8) is carried or constituted by an adjusting screw (10) threadable at the end into the tube branch (7), or by an insertable adjusting pin, an adjusting rod, or an adjusting piston.

10. The microscope according to Claim 9, wherein adjustment and thus tuning of the interference conditions in the tube branch (7) is accomplished in motorized fashion, or hydraulically or pneumatically.

11. The microscope according to one of Claims 1 to 10, wherein tuning of the tube branch (7) is accomplished by selecting a suitable material having a defined sound absorption behavior.

12. The microscope according to one of Claims 1 to 11, wherein the bypass (11) has an acoustic path length that is longer, by an amount equal to half the sound wavelength, than the tubes (6).

13. The microscope according to one of Claims 1 to 12, wherein acoustic absorbers (12) are provided in the interior of the housing (2) and/or in the interior of the tube(s) (6), the acoustic absorbers (12) being embodied as at least partial linings of the respective inner wall surfaces.

14. The microscope according to one of Claims 1 to 13, wherein it is a scanning microscope.

## Revendications

1. Microscope équipé d'un dispositif amortissant le bruit dans le faisceau de rayons optiques (1) du microscope, comprenant un carter de protection contre le bruit (carter) (2) pour encapsuler un composant émettant un bruit, notamment un moyen de déviation d'acier se déplaçant rapidement ou un moyen de déviation de rayon oscillant ou un miroir (3) oscillant en résonance, le carter (2) comportant au moins une ouverture d'entrée/sortie optique, le carter (2) étant réalisé et/ou étant équipé de telle sorte que le bruit sortant par ailleurs du carter (2) est largement gommé par interférence destructive, sans influer en l'occurrence sur le rayon optique (4) traversant l'ouverture d'entrée/sortie, **caractérisé en ce que** l'ouverture d'entrée/sortie est formée à travers un tube (6) s'étendant hors du carter (2), le tube (6) étant équipé d'au moins une dérivation de tube (7) saillant en côté hors du tube (6), que la dérivation de tube (7) est fermée du côté d'extrémité ou que la dérivation de tube (7) prend la forme d'un bypass (11) sortant du tube (6) et redébouchant à nouveau dans le tube (6) ou dans le carter (2) avec la longueur de chemin acoustique adaptée.

2. Microscope selon la revendication 1, **caractérisé en ce qu'**une ouverture d'entrée optique et une ouverture de sortie optique prennent la forme d'une ouverture d'entrée et d'une ouverture de sortie séparées et que l'ouverture d'entrée et l'ouverture de sortie sont amorties selon le même principe par rapport à une émission de bruit.

3. Microscope selon la revendication 1 ou 2, **caractérisé en ce que** le tube (6) est équipé de deux dérivations de tube (7) ou plus saillant en côté hors du tube (6).

4. Microscope selon l'une quelconque des revendications 1 à 3, **caractérisé en ce que** la dérivation de tube (7) est fermée du côté d'extrémité au moyen d'une paroi de réflexion du bruit (8).

5. Microscope selon la revendication 3 ou 4, **caractérisé en ce que** les dérivations de tube (7) sont réalisées de façon différente et comportent de préférence différentes profondeurs, notamment pour amortir simultanément différentes fréquences de bruit.

6. Microscope selon l'une quelconque des revendications 1 à 5, **caractérisé en ce que** la dérivation de tube (7) est réalisée de telle sorte que les ondes de bruit passant dans la dérivation de tube (7) et s'y réfléchissant connaissent un changement de phase de 180° par rapport à l'onde passant dans le tube (6) dans la direction longitudinale et conduisent à l'interférence destructive avec l'onde dans la direction longitudinale.

7. Microscope selon l'une quelconque des revendications 1 à 6, **caractérisé en ce que** la syntonisation de la dérivation de tube (7) se produit par adaptation du diamètre/de la largeur et/ou de la longueur de la dérivation de tube (7).

8. Microscope selon la revendication 7, **caractérisé en ce que** la variation de la longueur de la dérivation de tube (7) prévoit une paroi de réflexion du bruit (8) faisant varier la profondeur de la dérivation de tube (7).

9. Microscope selon la revendication 8, **caractérisé en ce que** la paroi de réflexion du bruit (8) est supportée ou est formée à partir d'une vis de réglage (10) vissable dans la dérivation de tube (7) depuis un côté d'extrémité ou depuis un pointeau de réglage insérable, une tige de réglage ou un piston de réglage.

10. Microscope selon la revendication 9, **caractérisé en ce que** le réglage et ainsi la syntonisation des conditions d'interférence se produit de façon motorisée et/ou hydraulique ou pneumatique dans la dérivation de tube (7).

11. Microscope selon l'une quelconque des revendications 1 à 10, **caractérisé en ce que** la syntonisation de la dérivation de tube (7) se produit par choix d'une matière adaptée avec comportement d'absorption du bruit défini.

12. Microscope selon l'une quelconque des revendications 1 à 11, **caractérisé en ce que** le bypass (11) a un tronçon de chemin acoustique plus long de la moitié de la longueur de bruit d'onde sous la forme des tubes (6).

13. Microscope selon l'une quelconque des revendications 1 à 12, **caractérisé en ce que** des absorbeurs (12) acoustiques sont prévus à l'intérieur du carter (2) et/ou à l'intérieur du ou des tubes (6), les absorbeurs (12) acoustiques pouvant être réalisés sous la forme d'au moins des revêtements partiels des surfaces de paroi intérieure respectives.

14. Microscope selon l'une quelconque des revendications 1 à 13, **caractérisé en ce qu'**il prend la forme d'un microscope de balayage.
